# EUROPEAN PATENT APPLICATION

(11) **EP 1 143 446 A2**
(43) Date of publication of application: **10.10.2001**
(21) Application number: 01302099.5
(22) Date of filing: 07.03.2001
(51) Int. Cl.: G11B 23/107, G11B 23/26

(54) **Tape cartridge**

(30) Priority: 29.03.2000 JP 2000090836
(71) Applicant: TDK Corporation, Chuo-ku, Tokyo 103-8272 (JP)
(72) Inventor: Kaneda, Hiroshi, c/o TDK Corporation, Tokyo 103-8272 (JP); Shima, Motohiko, c/o TDK Corporation, Tokyo 103-8272 (JP); Momoi, Akio, c/o TDK Corporation, Tokyo 103-8272 (JP)
(74) Representative: Chapman, Helga Claire

(57) **Abstract**

A tape cartridge comprising a housing, a single tape reel turnably held within the housing, the tape reel carrying a length of tape wound thereon, the outer end of the tape being fixed to a leader member, which can be taken out of the cartridge through an opening formed in the housing by a tape draw-out member of a recording-reproducing apparatus, the leader member being composed of a pin member and a C-shaped resin clamp, the wall thickness H1 of the C-shaped clamp portions defining the open portion and the wall thickness H2 of the clamp portion opposite to the open portion being in the ranges of H1 = 0.7 to 1.0 mm and H2/H1 = 0.6 to 0.8. Preferably, the outer surfaces of the clamp portions defining the open portion are beveled in the directions that reduce the resistances to be encountered at the time of assembling.

## Description

### BACKGROUND OF THE INVENTION

This invention relates to a single-reel type tape cartridge for use with magnetic recording-reproducing apparatus.

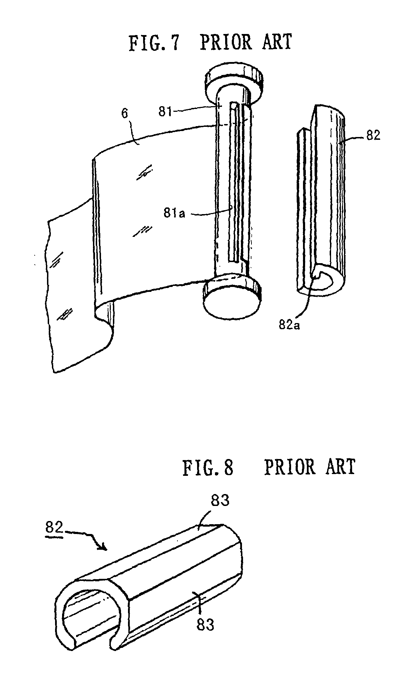

Japanese Patent Application Kokai No. 11-353848 describes means for securing the outer end of a magnetic tape to a leader pin inside a single-reel type tape cartridge. As illustrated in FIG. 7, the end of tape 6 is wound round a metallic leader pin 81, and a C-shaped resin clamp 82 is fitted over the pin, with the tape end portion in between. To ensure the fixing of the end portion of the tape 6, a ridge 82a formed along one edge of the clamp 82 is fitted, together with the tape end portion, in a longitudinal slot 81a formed in the leader pin 81. In addition, as FIG. 8 shows, the outer surface of the clamp 82 is provided with a flat surface in at least one sector as a plane for positional control of a jig with which the clamp is to be fitted over the pin.

The literature introduces an approach to positive means of fixing a clamp to a pin member; it places no weight, however, on means which makes the ease of clamping consistent with the adequacy of clamping force.

For tape cartridges of the character, it is essential that both the clamping force on the tape and the facility of assembling be enhanced.

The clamp member is preferably made of plastic, because a metal clamp can cut the tape with its edge. When the number of components and the ease of assembling are taken into account, it is desirable that the fixing means comprises a pin member and a C-shaped clamp member, with a tape end portion wound round the pin and the C-shaped clamp fitted over them.

From the viewpoint of easy assembling, the broader the open portion (between the edges of the letter C) of the C-shaped clamp the better. The clamping force on the tape is accordingly sacrificed, however.

Conversely if the open portion is narrower, the clamp must be deformed to a greater extent for the assembling, with the possibility of cracking or whitening of the clamp.

### SUMMARY OF THE INVENTION

The present invention provides a tape cartridge comprising a housing, a single tape reel turnably held within the housing, said tape reel carrying a length of tape wound thereon, the outer end of the tape being fixed to a leader member, which can be taken out of the cartridge through an opening formed in the housing by a tape draw-out member of a recording-reproducing apparatus (hereinafter called a recorder), said leader member being composed of a pin member and a C-shaped resin clamp, the wall thickness H1 of the C-shaped clamp portions defining the open portion and the wall thickness H2 of the clamp portion opposite to the open portion being in the ranges of H1 = 0.7 to 1.0 mm and more preferably H1 = 0.7 to 1.0 mm and H2/H1 = 0.6 to 0.8. The inner diameter of the clamp preferably ranges from about 1.4 to 1.5 mm.

Preferably, the outer surfaces of the clamp portions defining the open portion are beveled in the directions that reduce the resistances to be encountered at the time of assembling.

### BRIEF DESCRIPTION OF THE DRAWINGS

FIG. 1 is an exploded view of a tape cartridge embodying the present invention;
FIG. 2 is an exploded view of a leader member;
FIG. 3 shows, in cross section, a sequence of stages in which a C-shaped clamp is fitted on a pin;
FIG. 4 shows a C-shaped clamp with a modified thin wall portion;
FIG. 5 shows a C-shaped clamp with another modified thin wall portion;

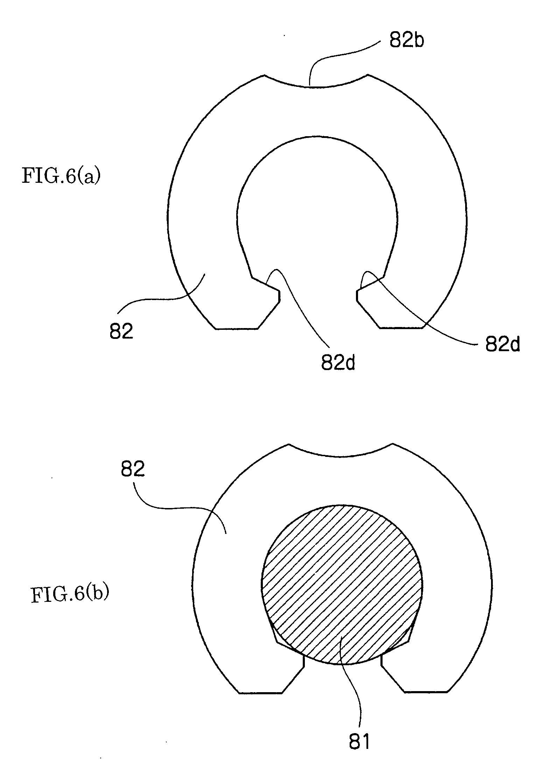

FIG. 6 shows a C-shaped clamp with a modified open portion;
FIG. 7 is a perspective view of a clamp member of the prior art; and
FIG. 8 is a perspective view of a conventional clamp.

### DETAILED DESCRIPTION OF THE INVENTION

In the leader member of the invention, the pin member is made of stainless steel or other metallic material and its diameter ranges from about 1.4 to 1.5 mm. A C-shaped clamp to fix the tape end portion to the pin member is made of a resin, especially one selected from among acetal resins, polyamides and other materials of high modulus of elasticity and great toughness.

If the open portion of the C-shaped clamp made of such a resin is too narrow, the clamp is not easily fitted onto the pin member. However, the open portion should not be so broad as to allow the clamp to come off readily from the pin member. According to the present invention, therefore, the open portion of the C-shaped clamp is narrowed to some extent, so that the engageable area is large enough for the clamp to be not readily releasable from the pin member. Moreover, the wall thickness of the clamp portion opposite to the open portion is reduced to decrease its elasticity locally, whereby the clamp is made easier to fit around the pin member.

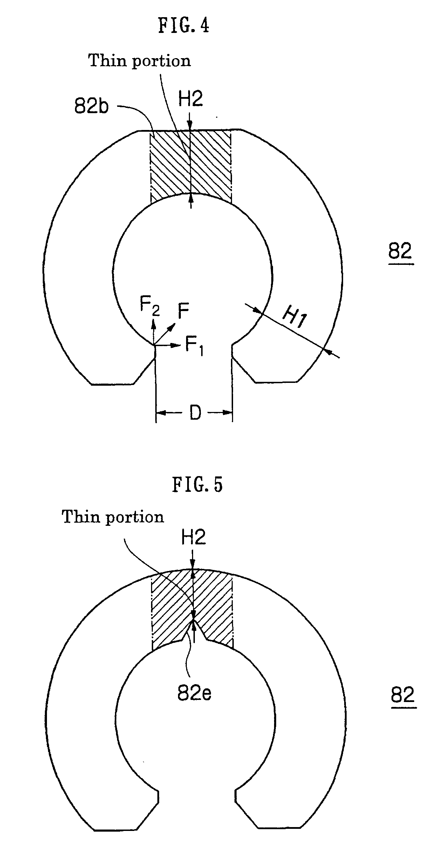

The principles of the invention will now be explained with reference to FIG. 4 which illustrates an embodiment of the invention. Here a C-shaped clamp 82 is made as a slender clamp having an inside diameter equivalent to the diameter of a pin member. The width D of the open portion is narrow enough for the force F, with which a pin member fitted in the clamp is pulled together with the clamped end of tape toward the open portion, to act as a reaction force, and its component F2 acts as a drag in the direction where the pin is pulled. A perpendicular component of force, F1, serves as a drag to the force expanding the open portion, and if it is too strong the pin is difficult to fit in or come out of the clamp. Under the invention, therefore, a thin wall portion 82b is provided opposite to the open portion so as to reduce the drag F1. (Actual drags F, F1 and F2 have values integrated on the inner surface of the clamp.)

Thus the thickness settings of the clamp are: H1 in the range from 0.7 to 1.0 mm and H2 of the thin wall portion 82b in the range from 0.6 to 0.8.

The clamp has an inside diameter of about 1.3 to 1.5 mm, and the width D of the open portion desirably ranges from 0.7 to 0.9 mm.

The construction according to the present invention facilitates fitting of a pin member in the clamp while adequate clamping force is being maintained. Moreover, it avoids localized stress concentration and prevents partial whitening of the clamp.

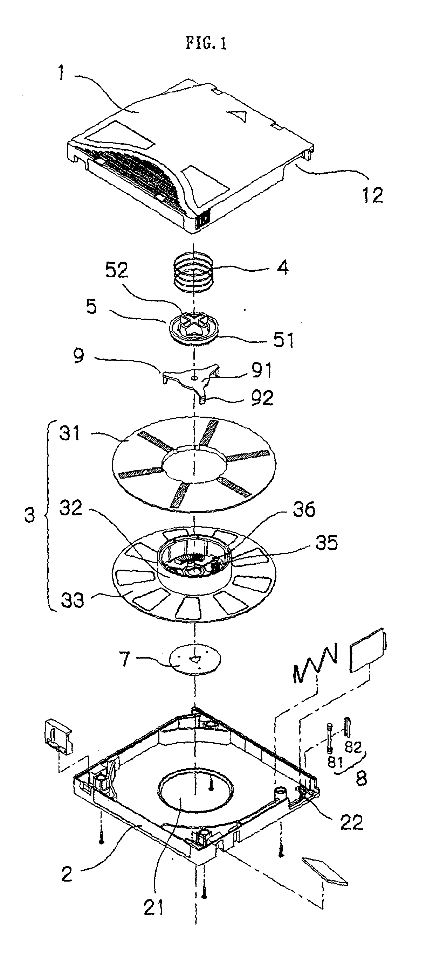

FIG. 1 is an exploded view of a tape cartridge embodying the invention.

The cartridge comprises a housing body made up of upper and lower housing halves 1 and 2, and a single tape reel 3 on which a length of tape is wound and which is held turnably in the housing.

The lower housing half has a hole 21 through which a drive shaft of a recorder is inserted into the housing. The upper and lower halves 1 and 2 of the housing are formed with opening halves 12 and 22, respectively, which are joined to provide an opening through which the tape is drawn out.

The tape reel 3 is composed integrally of an upper flange 31, a hub 32 formed in one piece with a lower flange 33, and a magnetically attractable metal disk 7 on the under side of the hub 32. Around the metal disk 7 on the under side of the hub, there is formed a serration (not shown) that comes in mesh with a corresponding one of the drive shaft of a recorder. The metal disk 7 is magnetically attracted by the drive shaft of the recorder, allowing the tape reel 3 to turn. The tape end is directly joined to the outer peripheral surface of the hub with water or the like, and there is no member provided for fixing the tape in place.

On the inner surface of the hub 32 are formed toothed parts 35 adapted to be in thread engagement with a reel brake 5 to prevent unwanted turning of the tape reel 3 while the latter is not in use.

The reel brake 5 is toothed at 51 along its lower periphery for engagement with the toothed parts 35 of the hub 32. The reel brake 5 is normally urged by a brake spring 4 in the braking position. It has a projection 52 which, in mesh with a positioning part (not shown) on the inner surface of the upper housing half 1, moves the brake up and down positively between the points where it is applied and released.

A brake release plate 9 is interposed between the hub 32 and the reel brake 5.

The brake release plate 9 consists of a main plate 91 and legs 92. The legs 92 fit in holes 36 formed in the under side of the hub and, when the cartridge is set in a recorder, the legs 92 of the brake release plate 9 are forced upward, with a consequent rise of the reel brake 5 out of engagement with the tape reel 3, allowing the latter to turn freely.

The front end of the tape 6 is fixed to a leader member 8. As the cartridge is inserted into a recorder, the leader member 8 is gripped by a holder member of the recorder, whereby the tape is drawn out. The leader member 8 comprises a pin member 81 and a C-shaped resin clamp 82, and an end portion of the tape 6 is wound round the pin member 81 and is fixed in place by the C-shaped clamp 82 fitted over it. The C-shaped clamp 82 is desirably made of polyacetal (POM) or nylon (PA).

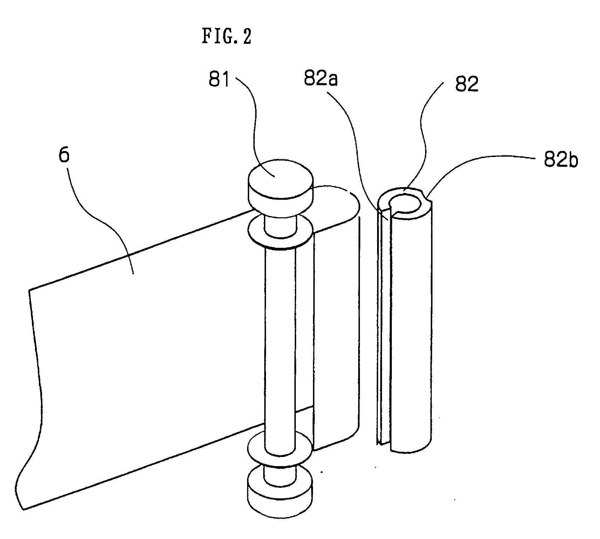

FIG. 2 is an enlarged perspective view of the leader member 8.

The C-shaped clamp 82 has an open portion 82a with which it is fitted over the pin member 81. Opposite to that portion, a thin wall portion 82b is formed in the clamp.

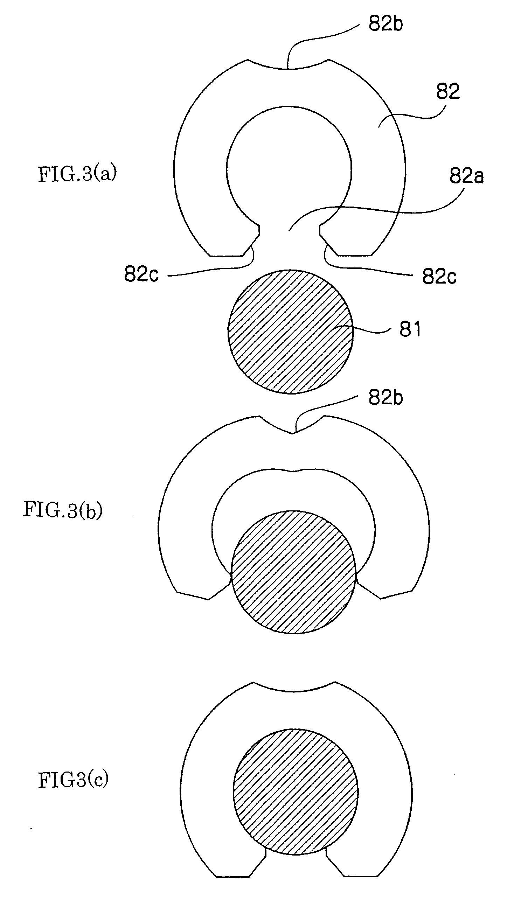

FIG. 3 illustrates a sequence of combining the C-shaped clamp 82 with the pin.

FIG. 3(a) is a sectional view of the C-shaped clamp 82 and the pin member 81 about to be combined or assembled. The both ends of the letter C defining the open portion 82a of the C-shaped clamp 82 have beveled surfaces 82c to allow the pin to force the both ends open with ease to get entrance into the clamp.

FIG. 3(b) is a sectional view of the two members being assembled. The thin wall portion 82b of the C-shaped clamp 82 that is easily deformable is now deformed. The thinner wall than the rest imparts flexibility to the clamp.

FIG. 3(c) is a sectional view of the two members that have been integrally assembled. The open portion 82a is narrow enough to have the tape end clamped securely.

A modified form of the thin wall portion 82b is shown in FIG. 4. The portion (hatched) opposite to the open portion 82a may have whatever shape desired which is thin enough for the intended purpose. The wall thickness may be further reduced by forming a notch or groove 32e on the inner side as in FIG. 5.

As an alternative, flat wall sectors 82d may be formed on the inner side of the clamp edges defining the open portion 82a, so that the pin member 81 after assembling can be positively held in place.

### Experiments

In experiments of the embodiment illustrated in FIG. 2, clamps of two different resins, a polyacetal ("Tenak 7054" manufactured by Asahi Chemical Industry Co.) and a polyamide ("Leona FG101" manufactured by the same company). Each measured 12.5 mm in length and 1.4 mm in inside diameter. The wall thickness of the portion 82b, H1 = 0.8 mm; the thickness H2 = 0.6 mm; and D = 0.8 mm. With the clamp, the end portion of a 17 µm-thick magnetic tape was fixed to a pin member 1.4 mm in diameter. The pressing force with which the clamp was fitted over the pin member and the force required to pull off the clamp from the pin after tape end fixing were compared with the forces required for clamps (comparative specimens) of the same materials and the same dimensions excepting that H1 = H2. In terms of the inventive specimens/comparative specimens, the results were as follows:
Polyacetal : Pressing force 0.7; pulling-off force 0.9.
Nylon : " 0.7; " 0.9.

The thin wall portion enables the clamp to be easily deformed and protects it against cracking when it is combined with a pin. The ease of deformation in turn makes it possible to narrow the width of the open portion, thereby adding to the clamping force.

Beveling of the wall surfaces defining the open portion reduces the resistances to be encountered at the time of assembling and thereby further improves the efficiency of assembling.

The pin member can be securely gripped by the clamp as flat wall sectors are formed on the inner side of the clamp, adjacent to the edges defining the open portion, at rather acute angles to the directions in which the pin is inserted in and taken out of the clamp.

## Claims

1. A tape cartridge comprising a housing, a single tape reel turnably held within the housing, said tape reel carrying a length of tape wound thereon, the outer end of the tape being fixed to a leader member, which can be taken out of the cartridge through an opening formed in the housing by a tape draw-out member of a recording-reproducing apparatus, said leader member being composed of a pin member and a C-shaped resin clamp, the wall thickness H1 of the C-shaped clamp portions defining the open portion and the wall thickness H2 of the clamp portion opposite to the open portion being in the ranges: H2/H1 = 0.6 to 0.8.

2. A tape cartridge according to claim 1, wherein the wall thickness H1 is in the range of 0.7 to 1.0 mm.

3. A tape cartridge according to claim 1 or 2 , wherein the outer surfaces of the clamp portions defining the open portion are beveled in the directions that reduce the resistances to be encountered at the time of assembling.

4. A tape cartridge according to claim 1 or 2, wherein the C-shaped clamp has an inside diameter of from 1.3 to 1.5 mm.
